# EUROPEAN PATENT APPLICATION

(11) **EP 4 614 667 A2**
(43) Date of publication of application: **10.09.2025**
(21) Application number: 25192256.3
(22) Date of filing: 06.04.2021
(51) Int. Cl.: H01M 10/42

(54) **ALL-SOLID-STATE BATTERY AND METHOD FOR MANUFACTURING ALL-SOLID-STATE BATTERY**

(30) Priority: 06.04.2020 KR 20200041744
(62) Divisional of application: 21784121.2
(71) Applicant: LG Energy Solution, Ltd., Seoul 07335 (KR)
(72) Inventor: KIM, Ji Young, 34122 Daejeon (KR); KIM, Hyo-Sik, 34122 Daejeon (KR)
(74) Representative: Plasseraud IP

(57) **Abstract**

The present disclosure relates to a solid-state battery. The solid-state battery is provided with a solid electrolyte membrane-protecting member, which compensates for a difference in area between an electrode and a solid electrolyte membrane, and thus the end portion of the solid electrolyte membrane is supported by the solid electrolyte membrane-protecting member. Therefore, even when the solid electrolyte membrane has low mechanical strength due to the use of a polymeric solid electrolyte, or the like, or has low shape stability due to high flexibility, the end portion of the solid electrolyte membrane may be supported by the solid electrolyte membrane-protecting member. As a result, it is possible to prevent damages of the end portion of the solid electrolyte membrane. The present disclosure also relates to a method for manufacturing the solid-state battery. According to the method, the solid electrolyte membrane-protecting member may be disposed in the portion corresponding to a difference in area between the electrode and the solid electrolyte membrane through a simple process. Therefore, it is possible to provide high convenience in processing.

## Description

### TECHNICAL FIELD

The present application claims priority to Korean Patent Application No. 10-2020-0041744 filed on April 6, 2020 in the Republic of Korea. The present disclosure relates to a solid-state battery including a negative electrode, a positive electrode and a solid electrolyte membrane between the negative electrode and the positive electrode, and a method for manufacturing the same. Particularly, the present disclosure relates to a method for manufacturing a solid-state battery including a solid electrolyte membrane-protecting member, which compensates for an area difference generated due to a difference in area between an electrode and a solid electrolyte membrane, in order to prevent the edge portion of the solid electrolyte membrane from being damaged.

### BACKGROUND ART

A lithium-ion battery using a liquid electrolyte has a structure in which a negative electrode and a positive electrode are divided from each other by a separator. Therefore, when the separator is damaged by deformation or external impact, a short-circuit may occur, resulting in a risk, such as overheating or explosion. Therefore, it can be said that development of a solid electrolyte capable of ensuring safety is a very important problem in the field of lithium-ion secondary batteries.

A lithium secondary battery using a solid electrolyte is advantageous in that it has enhanced safety, prevents leakage of an electrolyte to improve the reliability of a battery, and facilitates manufacture of a thin battery. In addition, lithium metal may be used as a negative electrode to improve energy density. Thus, such a lithium secondary battery using a solid electrolyte has been expected to be applied to a high-capacity secondary battery for electric vehicles in addition to a compact secondary battery, and has been spotlighted as a next-generation battery.

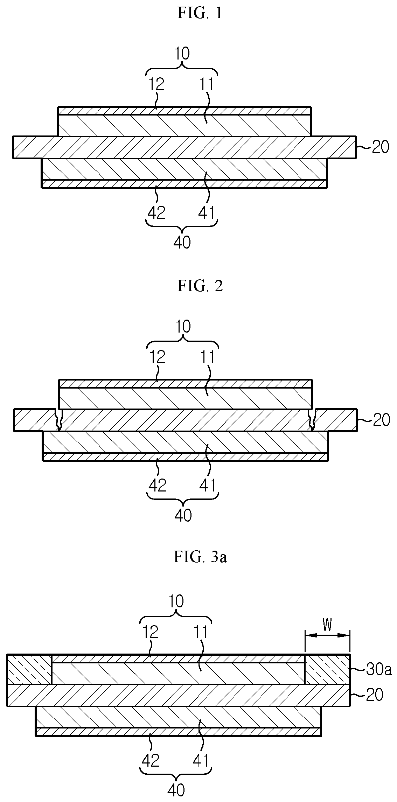

In general, polymeric solid electrolyte, oxide-based solid electrolyte and sulfide-based solid electrolyte materials are used as solid electrolyte materials. When freestanding type electrolyte membranes are manufactured by using such solid electrolyte materials alone, defects, such as tearing of the electrolyte membrane, may occur during the manufacture of a solid electrolyte membrane or a battery. Particularly, when manufacturing a battery, an electrolyte membrane generally has a larger area as compared to the area of an electrode in order to avoid electric interference between a negative electrode and a positive electrode, and the electrodes are disposed inside of the solid electrolyte membrane. FIG. 1 illustrates the sectional view of a solid-state battery in which a positive electrode, a solid electrolyte membrane and a negative electrode are stacked successively. Referring to FIG. 1, the solid electrolyte membrane has a larger length in the transverse and/or longitudinal direction, as compared to the positive electrode and the negative electrode. Therefore, it is likely that the solid electrolyte membrane may be damaged, and for example, the solid electrolyte membrane may be pushed and torn by the edge portion, i.e. the outer border, of the electrodes during the manufacture, such as lamination, of the electrodes and/or due to volumetric deformation of the electrode device caused by repeated charge/discharge of the battery. As a result, the solid electrolyte membrane undergoes degradation of insulation property to cause a short-circuit between the positive electrode and the negative electrode (see, FIG. 2). To prevent the above-mentioned problem, there have been considered methods of introducing a solid electrolyte membrane-protecting member to eliminate such an area difference between the electrodes and the solid electrolyte membrane and to prevent the solid electrolyte membrane from being damaged by the edge portions of the electrodes. However, particularly, a solid electrolyte membrane including a polymeric solid electrolyte material is soft and has significantly low mechanical strength, and thus cannot be handled with ease. In addition, it is very difficult in terms of processing to introduce a solid electrolyte membrane-protecting member to the portion of the solid electrolyte membrane, not covered with the electrodes but exposed to the outside, after stacking the electrodes and the solid electrolyte membrane. Under these circumstances, there is a need for a novel method for manufacturing a solid-state battery which includes introducing a solid electrolyte membrane-protecting member to a solid electrolyte membrane.

### DISCLOSURE

### Technical Problem

The present disclosure is designed to solve the problems of the related art, and therefore the present disclosure is directed to providing a solid-state battery provided with a solid electrolyte membrane-protecting member, which compensates for an area difference generated due to a difference in area between an electrode and a solid electrolyte membrane. The present disclosure is also directed to providing a method for manufacturing the solid-state battery provided with a solid electrolyte membrane-protecting member. These and other objects and advantages of the present disclosure may be understood from the following detailed description. Also, it will be easily understood that the objects and advantages of the present disclosure may be realized by the means shown in the appended claims and combinations thereof.

### Technical Solution

According to the first embodiment of the present disclosure, there is provided a solid-state battery having a structure in which a negative electrode, a positive electrode and a solid electrolyte membrane interposed between the negative electrode and the positive electrode are stacked successively, wherein the solid electrolyte membrane has a larger area as compared to the negative electrode and the positive electrode based on the stacked surface,
the negative electrode and the positive electrode are disposed inside of the solid electrolyte membrane based on the stacked surface,
a solid electrolyte membrane-protecting member is formed on at least a part or the whole of the non-coated portion, which is not covered with the positive electrode and/or the negative electrode of the stacked surface of the solid electrolyte membrane due to the difference in area,
the solid electrolyte membrane-protecting member and the positive electrode and/or the negative electrode disposed on the same surface as the solid electrolyte membrane-protecting member are not spaced apart from each other but are in close contact with each other at their lateral surfaces, and
the solid electrolyte membrane includes an ion conductive and electrically insulating material.

According to the second embodiment of the present disclosure, there is provided the solid-state battery as defined in the first embodiment, wherein the solid electrolyte membrane-protecting member and the positive electrode and/or the negative electrode formed on the same surface of the solid electrolyte membrane have the same height.

According to the third embodiment of the present disclosure, there is provided the solid-state battery as defined in the first or the second embodiment, wherein the solid electrolyte membrane-protecting member has a frame-like shape including an edge portion with a predetermined width and an opening surrounded with the edge portion.

According to the fourth embodiment of the present disclosure, there is provided the solid-state battery as defined in any one of the first to the third embodiments, wherein the positive electrode has a smaller area as compared to the negative electrode based on the stacked surface, the positive electrode is disposed inside of the negative electrode, the solid electrolyte membrane-protecting member is formed on the non-coated portion of the surface of the solid electrolyte membrane on which at least the positive electrode is disposed, and the positive electrode and the solid electrolyte membrane-protecting member are not spaced apart from each other but are in close contact with each other.

According to the fifth embodiment of the present disclosure, there is provided the solid-state battery as defined in the fourth embodiment, wherein the solid electrolyte membrane-protecting member is further formed on the non-coated portion of the surface of the solid electrolyte membrane on which the negative electrode is disposed, and the negative electrode and the solid electrolyte membrane-protecting member are not spaced part from each other but are in close contact with each other.

According to the sixth embodiment of the present disclosure, there is provided the solid-state battery as defined in any one of the first to the fifth embodiments, wherein the solid electrolyte membrane-protecting member includes a polymer material and has higher mechanical strength as compared to the solid electrolyte.

According to the seventh embodiment of the present disclosure, there is provided the solid-state battery as defined in any one of the first to the sixth embodiments, wherein the solid electrolyte membrane-protecting member includes a polymer material, has a porous structure having a plurality of pores, and the pores have at least open pores.

According to the eighth embodiment, there is provided a method for manufacturing the solid-state battery as defined in any one of the first to the seventh embodiments, including the steps of: preparing a member for an electrolyte membrane including a release sheet stacked with a solid electrolyte membrane; removing a predetermined central portion from the release sheet so that a part of the solid electrolyte membrane may be exposed; and embedding electrodes in the part from which the release sheet is removed, wherein the remaining part of the release sheet, which is not removed but retained, functions as a solid electrolyte membrane-protecting member.

According to the ninth embodiment, there is provided the method for manufacturing the solid-state battery as defined in the eighth embodiment, wherein each of the part removed from the release sheet and the remaining part has difference peel force from the solid electrolyte membrane, and the peel force between the removed part and the solid electrolyte membrane is lower than the peel force between the remaining part and the solid electrolyte membrane.

According to the tenth embodiment of the present disclosure, there is provided the method for manufacturing the solid-state battery as defined in the ninth embodiment, wherein the remaining part is hydrophilically surface treated.

### Advantageous Effects

The solid-state battery according to the present disclosure is provided with a solid electrolyte membrane-protecting member, which compensates for a difference in area between an electrode and a solid electrolyte membrane, and thus the end portion of the solid electrolyte membrane is supported by the solid electrolyte membrane-protecting member. Therefore, even when the solid electrolyte membrane has low mechanical strength due to the use of a polymeric solid electrolyte, or the like, or has low shape stability due to high flexibility, the end portion of the solid electrolyte membrane may be supported by the solid electrolyte membrane-protecting member. As a result, it is possible to prevent damages of the end portion of the solid electrolyte membrane. Meanwhile, according to the method for manufacturing the solid-state battery disclosed herein, the solid electrolyte membrane-protecting member may be disposed in the portion corresponding to a difference in area between the electrode and the solid electrolyte membrane through a simple process. Therefore, it is possible to provide high convenience in processing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a sectional view illustrating a conventional solid-state battery including a negative electrode, a solid electrolyte membrane and a positive electrode, stacked successively.
FIG. 2 is a schematic sectional view illustrating a conventional solid-state battery, wherein the solid electrolyte membrane is damaged by the edge portion of the electrode.
FIG. 3a is a schematic sectional view of the solid-state battery according to an embodiment of the present disclosure, including a negative electrode, a solid electrolyte membrane and a positive electrode, stacked successively, wherein a solid electrolyte membrane-protecting member is disposed in the portion corresponding to a difference in area between the positive electrode and the solid electrolyte membrane.
FIG. 3b is a perspective view of the solid-state battery as shown in FIG. 3a, wherein the dotted line represents the internal structure.
FIG. 4 is a schematic view illustrating a solid electrolyte membrane stacked with a positive electrode according to an embodiment of the present disclosure.
FIG. 5a is a schematic sectional view of the solid-state battery according to another embodiment of the present disclosure, including a negative electrode, a solid electrolyte membrane and a positive electrode, stacked successively, wherein a solid electrolyte membrane-protecting member is disposed in the portion corresponding to a difference in area between the positive and negative electrodes and the solid electrolyte membrane.
FIG. 5b is a perspective view of the solid-state battery as shown in FIG. 5a, wherein the dotted line represents the internal structure.
FIG. 6 is a schematic sectional view illustrating the solid-state battery according to an embodiment of the present disclosure, wherein a solid electrolyte membrane-protecting member protrudes out from the solid electrolyte membrane.
FIG. 7 illustrates the release sheet according to an embodiment of the present disclosure, wherein a portion to be peeled and a solid electrolyte membrane-protecting member are shown.
FIG. 8 is a schematic view illustrating the solid electrolyte membrane to which a release sheet is attached according to an embodiment of the present disclosure.
FIG. 9 illustrates an embodiment of the removal of a portion to be peeled from the release sheet according to an embodiment of the present disclosure.
FIG. 10 illustrates the electrode active material embedded in the part from which the portion to be peeled is removed according to an embodiment of the present disclosure.
FIG. 11a and FIG. 11b are graphs illustrating the cycle characteristics of the batteries according to Examples and Comparative Examples.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not preclude the presence of any additional elements but means that the part may further include the other elements, unless otherwise stated.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and 'bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

Unless otherwise stated, the term 'electrode' is used in a concept covering both a negative electrode and a positive electrode.

The present disclosure relates to a solid-state battery and a method for manufacturing the same. Herein, the battery is a system in which chemical energy is converted into electrical energy through electrochemical reactions, and has a concept including a primary battery and a secondary battery, wherein the secondary battery is capable of charging and discharging and has a concept covering a lithium-ion battery, a nickel-cadmium battery, a nickel-metal hydride battery, or the like. According to an embodiment of the present disclosure, the battery is a solid-state battery using a solid electrolyte material as an electrolyte material.

The solid-state battery includes electrode(s) and solid electrolyte membrane(s) stacked alternately, and a solid electrolyte membrane-protecting member partially or totally compensating for a difference in area between the electrode(s) and the solid electrolyte membrane(s). Particularly, at least a part or the whole of the portion (non-coated portion), not covered with the electrode(s) of at least one surface of the solid electrolyte membrane(s) due to a difference in area between the electrode(s) and the solid electrolyte membrane(s), is covered with the solid electrolyte membrane-protecting member compensating for the difference in area from the electrode(s). In other words, according to an embodiment of the present disclosure, the solid electrolyte membrane-protecting member may be formed on at least a part of the non-coated portion, wherein the solid electrolyte membrane-protecting member and the electrode(s) are not spaced apart from each other but are in close contact with each other. In other words, the electrode (positive electrode or negative electrode) disposed on the same surface as the solid electrolyte membrane-protecting member is not spaced apart from the solid electrolyte membrane-protecting member but is in close contact therewith at their lateral surfaces. Meanwhile, according to an embodiment of the present disclosure, the protecting member may have the same height as the electrode. In other words, the solid electrolyte membrane-protecting member and the electrode (negative electrode or positive electrode) formed on the same surface of the solid electrolyte membrane may have the same height. According to the present disclosure, the electrode refers to a negative electrode and/or a positive electrode. For example, the negative electrode may be disposed on one surface of the solid electrolyte membrane, and the positive electrode may be disposed on the other surface of the solid electrolyte membrane.

In the solid-state battery, among the electrodes and the solid electrolyte membrane, the solid electrolyte membrane has the largest area based on the area of the stacked surface, and the electrodes are prepared in such a manner that they may have an area smaller than the area of the solid electrolyte membrane. In other words, the electrodes are in surface contact with the solid electrolyte membrane, with the proviso that the electrodes are disposed inside of the solid electrolyte membrane so that they may not protrude out from the solid electrolyte membrane. Preferably, the end portions of the electrodes are spaced apart from the end portion of the solid electrolyte membrane by a predetermined width.

Meanwhile, according to an embodiment of the present disclosure, the solid-state battery includes two electrodes having a polarity opposite to each other at both sides of the solid electrolyte membrane, wherein one electrode has an area smaller than the area of the other electrode, and the electrode having a smaller area may be introduced into the plane of the other electrode. In other words, the electrode having a smaller area may be disposed inside of the width of the electrode having a larger area, based on the section of the battery. Herein, the solid electrolyte membrane-protecting member may be introduced at least to the surface of the solid electrolyte membrane on which the electrode having a smaller area is disposed in such a manner that it may at least partially compensate for a difference in area between the electrode and the solid electrolyte membrane.

Throughout the specification, 'electrode' refers to a positive electrode and/or a negative electrode.

Hereinafter, the solid-state battery according to the present disclosure will be explained in more detail with reference to the accompanying drawings.

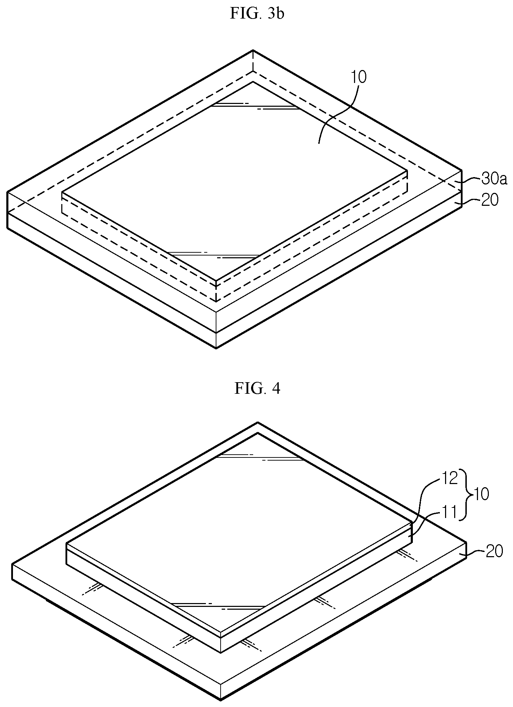

FIG. 3a is a schematic sectional view of the solid-state battery according to an embodiment of the present disclosure. In addition, FIG. 3b is a perspective view of the solid-state battery including a solid electrolyte membrane-protecting member disposed totally at the outer circumferential portion of a positive electrode.

The solid-state battery includes a positive electrode 10, a negative electrode 40 and a solid electrolyte membrane 20, wherein the positive electrode and the negative electrode are stacked successively with the solid electrolyte membrane interposed therebetween. Herein, the positive electrode has a smaller area as compared to the negative electrode and is disposed inside of the plane of the negative electrode. Herein, the solid electrolyte membrane-protecting member 30a is installed merely on the surface of the positive electrode side so that it may compensate for a difference in area between the positive electrode 10 and the solid electrolyte membrane 20. As mentioned above, since the positive electrode has a smaller area as compared to the negative electrode and the solid electrolyte membrane-protecting member is installed in the portion where the positive electrode is disposed to support the solid electrolyte membrane, it is possible to reduce the problem of damages of the solid electrolyte membrane caused by the edge portion of the positive electrode. In brief, the positive electrode has a smaller area as compared to the negative electrode based on the stacked surface, the positive electrode is disposed inside of the negative electrode, the solid electrolyte membrane-protecting member is formed on the non-coated portion of the surface of the solid electrolyte membrane on which at least the positive electrode is disposed, and the positive electrode and the solid electrolyte membrane-protecting member are not spaced apart from each other but are in close contact with each other.

Meanwhile, in the accompanying drawings, drawing numeral 11 represents a positive electrode active material layer, drawing numeral 12 represents a positive electrode current collector, drawing numeral 41 represents a negative electrode active material layer, and drawing numeral 42 represents a negative electrode current collector. In addition, drawing numeral 30a represents a solid electrolyte membrane-protecting member formed at the outer circumference of the positive electrode, and drawing numeral 30b represents a solid electrolyte membrane-protecting member formed at the outer circumference of the negative electrode.

Thus, in the solid-state battery according to the present disclosure, the solid electrolyte membrane has a larger area as compared to the area of each electrode based on the stacked surface, and a difference in area is generated between each electrode and the solid electrolyte membrane, when the solid electrolyte membrane is stacked with the electrodes. Due to such a difference in area, the stacked surface of the solid electrolyte membrane has a non-coated portion, not covered with the electrodes, and the solid electrolyte membrane-protecting member is further provided on the surface of the non-coated portion. The solid electrolyte membrane-protecting member is intended to eliminate a difference in area generated by the area of each electrode smaller than the area of the solid electrolyte membrane, partially or totally, and it may be disposed on at least a part or the whole of the non-coated portion formed when the electrodes are stacked with the solid electrolyte membrane. In other words, at least a part or the whole of the exposed portion of the solid electrolyte membrane, not covered with the electrodes, may be covered with the solid electrolyte membrane-protecting member.

Referring to FIG. 3a, the solid electrolyte membrane-protecting member is disposed in the portion W corresponding to a difference in area between the positive electrode and the solid electrolyte membrane. The end portion of the solid electrolyte membrane is supported by the solid electrolyte membrane-protecting member, and thus damages of the end portion of the solid electrolyte membrane may be reduced significantly.

FIG. 4 is a schematic view illustrating a positive electrode disposed on the surface of a solid electrolyte membrane, wherein the area of each electrode is smaller than the area of the solid electrolyte membrane, and each electrode is disposed inside of the solid electrolyte membrane so that the end portions of the electrodes may be spaced apart from the end portion of the solid electrolyte membrane.

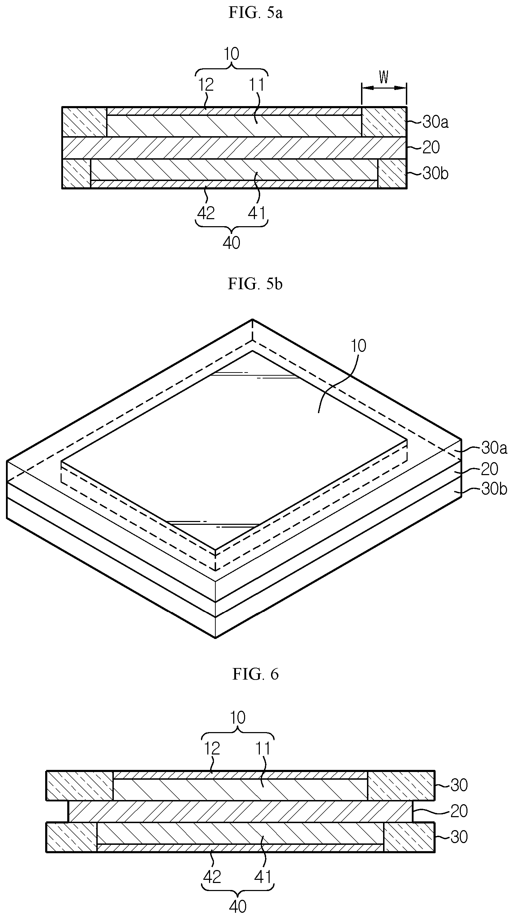

Meanwhile, according to another embodiment of the present disclosure, solid electrolyte membrane-protecting members are disposed at both portions corresponding to a difference in area between a positive electrode and a solid electrolyte membrane and a difference in area between a negative electrode and a solid electrolyte membrane, and may have a frame-like shape including an edge portion with a predetermined width and an opening surrounded by the edge portion. Thus, a solid electrolyte membrane-protecting member is further formed at the non-coated portion of the surface of the solid electrolyte membrane on which the negative electrode is disposed, and the negative electrode and the solid electrolyte membrane-protecting member are not spaced apart from each other but are in close contact with each other. FIG. 5a and FIG. 5b show another embodiment of the present disclosure and illustrate a solid-state battery including solid electrolyte membrane-protecting members disposed totally at the outer circumferential portions of the positive electrode and the negative electrode.

According to an embodiment of the present disclosure, the solid electrolyte membrane-protecting member may coincide with the solid electrolyte membrane at their end portions. According to another embodiment of the present disclosure, the solid electrolyte membrane-protecting member may have a larger or smaller size as compared to the solid electrolyte membrane. When the solid electrolyte membrane-protecting member is larger than the solid electrolyte membrane, at least a part or the whole of the end portion of the solid electrolyte membrane-protecting member may protrude out from the solid electrolyte membrane in the solid-state battery. FIG. 6 illustrates such a solid electrolyte membrane-protecting member protruding out from the solid electrolyte membrane.

Meanwhile, according to an embodiment of the present disclosure, the solid electrolyte membrane-protecting member has a thickness equal to or smaller than the thickness of the positive electrode, and may have a thickness corresponding to 30% or more based on 100% of the thickness of the positive electrode active material layer within the above-defined range. When the solid electrolyte membrane-protecting member has the same thickness as the thickness of the positive electrode, it may be disposed as shown in FIG. 3a and FIG. 6. When the solid electrolyte membrane-protecting member has a thickness smaller than the thickness of the positive electrode, the solid electrolyte membrane-protecting member may be disposed preferably in such a manner that it may be in surface contact with the solid electrolyte membrane.

According to an embodiment of the present disclosure, the solid electrolyte membrane is interposed between a positive electrode and a negative electrode and plays a role as an electrical insulating- and ion conductive-layer between the positive electrode and the negative electrode. The solid electrolyte membrane preferably has an ion conductivity of 1.0 x 10⁻⁶ S/cm or more, or 1.0 x 10⁻³ S/cm or more, but is not limited thereto. In addition, according to an embodiment of the present disclosure, the solid electrolyte membrane may have a thickness of about 10-200 µm and may be prepared preferably in the form of a freestanding film.

According to an embodiment of the present disclosure, the positive electrode includes a positive electrode current collector, and a positive electrode active material layer formed on at least one surface of the current collector and containing a positive electrode active material and a solid electrolyte. If necessary, the positive electrode active material layer may further include a conductive material, a binder resin, or the like. The positive electrode active material may include any one selected from: layered compounds, such as lithium manganese composite oxide (LiMn₂O₄, LiMnO₂, etc.), lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; and Fe₂(MoO₄)₃; or a mixture of two or more of them. However, the scope of the present disclosure is not limited thereto. Although there is no particular limitation, the positive electrode active material may have a particle diameter (D₅₀) of 1-20 µm. Herein, it is understood that 'particle diameter' refers to D₅₀ particle diameter, which means a particle diameter corresponding to 50% of weight percentage in a particle size distribution curve.

According to the present disclosure, the negative electrode includes a negative electrode current collector, and a negative electrode active material layer formed on at least one surface of the current collector and containing a negative electrode active material. According to the present disclosure, the negative electrode active material layer includes lithium metal and may be prepared by joining lithium metal foil having a predetermined thickness with the surface of the current collector, or by depositing lithium metal onto the surface of the current collector through a chemical or physical process. In a variant, the negative electrode active material layer may be formed by forming compressed lithium metal powder on the surface of the current collector in the form of a layered structure. According to an embodiment of the present disclosure, the lithium metal foil may have a thickness of 1-20 µm.

The negative electrode may further include another active material together with lithium metal. Non-limiting examples of such a negative electrode active material include any one selected from: lithium metal oxide; carbon such as non-graphitizable carbon or graphite-based carbon; metal composite oxides, such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb, Ge; Me': Al, B, P, Si, elements of Group 1, 2 or 3 in the Periodic Table, halogen; 0 < x ≤ 1; 1 ≤ y ≤ 3; 1 ≤ z ≤ 8); lithium metal; lithium alloy; silicon-based alloy; tin-based alloy; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers, such as polyacetylene; Li-Co-Ni type materials; and titanium oxide; or a mixture of two or more of them. If necessary, the negative electrode active material layer may further include a conductive material, a binder resin, or the like.

According to an embodiment of the present disclosure, the conductive material may be any one selected from the group consisting of graphite, carbon black, carbon fibers or metal fibers, metal powder, conductive whiskers, conductive metal oxides, activated carbon and polyphenylene derivatives, or a mixture of two or more of such conductive materials. More particularly, the conductive material may be any one selected from natural graphite, artificial graphite, Super-P, acetylene black, Ketjen black, channel black, furnace black, lamp black, thermal black, denka black, aluminum powder, nickel powder, zinc oxide, potassium titanate and titanium dioxide, or a mixture of two or more such conductive materials.

The current collector is not particularly limited, as long as it causes no chemical change in the corresponding battery and has high conductivity. Particular examples of the current collector may include stainless steel, copper, aluminum, nickel, titanium, baked carbon, aluminum or stainless steel surface-treated with carbon, nickel, titanium or silver, or the like.

The binder resin may be a polymer used conventionally for an electrode in the art. Non-limiting examples of the binder resin include, but are not limited to: polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethy1polyvinyla1cho1, cyanoethyl cellulose, cyanoethyl sucrose, pullulan, and carboxymethyl cellulose.

As described above, the solid-state battery according to the present disclosure includes a solid electrolyte material. The solid electrolyte material may be incorporated to at least one of the negative electrode, the positive electrode and the solid electrolyte membrane. The solid electrolyte material may include at least one selected from a polymeric solid electrolyte, a sulfide-based solid electrolyte and an oxide-based solid electrolyte.

According to an embodiment of the present disclosure, the polymeric solid electrolyte material may include a polymeric electrolyte material formed by adding a polymer resin to a solvated lithium salt. The polymer resin may include any one selected from the group consisting of a polyether polymer, a polycarbonate polymer, an acrylate polymer, a polysiloxane polymer, a phosphazene polymer, a polyethylene derivative, polyethylene oxide, polyethylene glycol, an alkylene oxide derivative, a polyphosphate polymer, polyagitation lysine, polyester sulfide, polyvinyl alcohol, polyvinylidene fluoride and a polymer containing an ionically dissociable group, or a mixture of two or more of them.

In the electrolyte according to the present disclosure, the lithium salt is an ionizable lithium salt and may be represented by Li⁺X⁻. The anion (X) of lithium salt is not particularly limited and particular examples thereof include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or the like.

The sulfide-based solid electrolyte contains sulfur (S), has conductivity of metal ions that belong to Group1 or Group 2 in the Periodic Table, and may include Li-P-S glass or Li-P-S glass ceramic. Non-limiting examples of the sulfide-based solid electrolyte include at least one of Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, or the like.

The oxide-based solid electrolyte contains oxygen (O), has conductivity of metal ions that belong to Group 1 or Group 2 in the Periodic Table. Non-limiting examples of the oxide-based solid electrolyte include at least one of LLTO compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP compounds, LATP compounds, Li₁₊ₓTi₂₋ₓAlₓSi_{y}(PO₄)_{3-y} (wherein 0 ≤ x ≤ 1, 0 ≤ y ≤ 1), LiAlₓZr₂₋ₓ(PO₄)₃ (wherein 0 ≤ x ≤ 1, 0 ≤ y ≤ 1), LiTiₓZr₂₋ₓ(PO₄)₃ (wherein 0 ≤ x ≤ 1, 0 ≤ y ≤ 1), LISICON compounds, LIPON compounds, perovskite compounds, NASICON compounds and LLZO compounds.

According to an embodiment of the present disclosure, the solid electrolyte membrane-protecting member may be a thin film including a polymer resin. Particularly, as described hereinafter, the solid electrolyte membrane-protecting member may be a non-removed part of a release sheet for protecting the surface of a solid electrolyte membrane, when the solid electrolyte membrane is prepared for manufacturing a solid-state battery.

Meanwhile, according to an embodiment of the present disclosure, the polymer resin preferably has low or no reactivity with the solid electrolyte membrane. In addition, the polymer resin may have a melting point of 100°C or higher and a glass transition temperature of -30 to 200°C with a view to mechanical strength, shape stability and safety during the use of a battery. According to an embodiment of the present disclosure, the solid electrolyte membrane-protecting member has higher mechanical strength as compared to the solid electrolyte membrane used in the corresponding battery. For example, the solid electrolyte membrane-protecting member preferably has at least one of higher compression strength, higher tensile strength and higher penetration strength, as compared to the solid electrolyte membrane. If the mechanical strength of the solid electrolyte membrane-protecting member is the same as or lower than the mechanical strength of the solid electrolyte membrane, it is not possible to accomplish a desired level of effect of protecting the solid electrolyte membrane.

According to an embodiment of the present disclosure, the solid electrolyte membrane-protecting member may include at least one selected from various polymer resins that belong to polyolefinic polymer resins. Particular examples of the polyolefinic polymer resins include polymers or copolymers of at least one selected from the group consisting of ethylene, propylene, 1-butene, 4-methyl-1-pentene, 1-hexene, 1-octene, or the like, or a combination of two or more of them. Such polyolefinic polymer resins may be used alone or in combination. In combination with the polyolefinic polymer resins or independently therefrom, the solid electrolyte membrane-protecting member may include at least one selected from the group consisting of polyethylene terephthalate, polybutylene terephthalate, polyester, polyacetal, polyamide, polycarbonate, polyimide, polyetherether ketone, polyether sulfone, polyphenylene oxide, polyphenylene sulfide, polyethylene naphthalene, polysulfone, cellulose acetate and polystyrene, or a mixture of two or more of them. However, the materials forming the solid electrolyte membrane-protecting member are not limited to the above-listed materials, and any material may be used with no particular limitation, as long as it has such a degree of shape stability that the solid electrolyte membrane may be prevented from deformation and it is an electrochemically stable material. For example, the solid electrolyte membrane-protecting member may include at least one of polyimide-based polymer resins, polyethylene and polypropylene.

According to an embodiment of the present disclosure, the solid electrolyte membrane-protecting member includes a polyimide-based polymer resin, which has at least one of higher compression strength, higher tensile strength and higher penetration strength, as compared to the solid electrolyte membrane.

Meanwhile, according to an embodiment of the present disclosure, the solid electrolyte membrane-protecting member may have a porous structure including a plurality of pores therein, wherein the pores may include open pores and/or closed pores. Preferably, the porous structure has open pores so that gases or fluids may flow from one side of the protecting member to the other side thereof. When the solid electrolyte membrane-protecting member has such a porous structure, it is possible to improve the life characteristics of a battery.

Hereinafter, the method for manufacturing a solid-state battery according to the present disclosure will be explained.

The method for manufacturing a solid-state battery includes the steps of: preparing a member for an electrolyte membrane including a release sheet stacked with a solid electrolyte membrane; removing a predetermined central portion from the release sheet so that a part of the solid electrolyte membrane may be exposed; and embedding electrodes in the part from which the release sheet is removed, wherein the remaining part of the release sheet, which is not removed but retained, functions as a solid electrolyte membrane-protecting member.

The method will be explained in more detail hereinafter.

First, prepared is a member for an electrolyte membrane including a release sheet stacked with a solid electrolyte membrane. First, an electrolyte film that may be used as a solid electrolyte membrane is prepared. The electrolyte film may be prepared as follows. For example, a polymeric electrolyte material is mixed with a solvent to obtain slurry for preparing an electrolyte film. The solvent may be selected suitably depending on the polymeric electrolyte to be used. For example, when using an alkylene oxide-based electrolyte, such as polyethylene oxide (PEO), as a polymer resin, acetonitrile may be used as a solvent. According to an embodiment of the present disclosure, the slurry may have a solid content of about 1-20 wt%, and the slurry may be present at room temperature or may be warmed to 30-80°C to accelerate homogeneous mixing of the solvent with the polymeric electrolyte.

Next, the slurry is applied to a release sheet 50 and formed into the shape of a film having a predetermined thickness. The application and film shaping may be carried out by a known coating process, such as doctor blade coating. Then, the slurry is dried to remove the solvent, thereby providing an electrolyte film.

According to an embodiment of the present disclosure, the release sheet 50 is prepared in such a manner that it may be divided into two zones different from each other in terms of peel force. In other words, one zone is portion S51 to be peeled having relatively lower peel force from the electrolyte film, and the portion other than the portion to be peeled is a solid electrolyte membrane-protecting member portion S52 having relatively higher peel force from the electrolyte film. The portion to be peeled may be formed inside of the release sheet, and is removed from the solid electrolyte film upon the formation of an electrode active material layer, as described hereinafter. The portion remaining after removing the portion to be peeled becomes a solid electrolyte membrane-protecting member and is formed at the edge portion of the release sheet.

The dimension and size of the release sheet may be controlled by a suitable method considering the size of a battery to be manufactured, size of the solid electrolyte membrane, size of the electrode active material layer and the width of the solid electrolyte membrane-protecting member portion.

Meanwhile, the release sheet may have reduced or increased peel force through the surface treatment of any one portion in order to provide a difference in peel force between the solid electrolyte membrane-protecting member portion and the portion to be removed. For example, surface treatment capable of increasing the adhesion to the solid electrolyte membrane may be carried out to increase the peel force of the solid electrolyte membrane-protecting member portion of the release sheet. For example, when using a PEO-based polymer material is used as a solid electrolyte material, hydrophilic surface modification treatment may be carried out for the solid electrolyte membrane-protecting member portion of the release sheet so that the affinity with polyethylene oxide (PEO) may be increased. When the affinity of the solid electrolyte membrane-protecting member portion to the electrolyte material is increased as mentioned above, the solid electrolyte membrane-protecting member portion is not removed together with the portion to be peeled upon the removal of the portion to be peeled, but is in close contact with the electrolyte film so that it may be retained well on the surface of the electrolyte film. The hydrophilic surface modification treatment is not particularly limited. For example, a suitable method may be selected from the known methods, such as UV irradiation, plasma treatment, acid treatment and ozone treatment.

The release sheet may further include a cutting line in order to set the position of the solid electrolyte membrane-protecting member preliminarily and to cut the border line between the solid electrolyte membrane-protecting member portion and the portion to be peeled with ease.

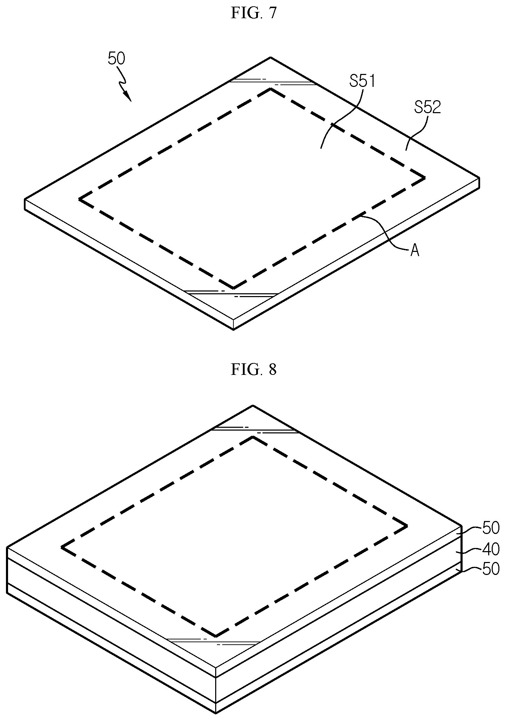

FIG. 7 illustrate a release sheet in which the position of a solid electrolyte membrane-protecting member is marked and a cutting line is formed at the border between the solid electrolyte membrane-protecting member portion and the portion to be peeled. According to the present disclosure, since the release sheet should be used as a supporting member during the manufacture of the solid electrolyte membrane, it is required that cutting line A does not completely separate the solid electrolyte membrane-protecting member portion from the portion to be removed. In other words, the cutting line may be formed in the shape of a dotted line or broken line so that the solid electrolyte membrane-protecting member portion may be partially connected with the portion to be peeled, before removing the portion to be peeled.

In addition, according to an embodiment of the present disclosure, the solid electrolyte membrane may include the above-described release sheet on both surfaces thereof (see, FIG. 8). For example, after the slurry is applied to and dried on any one surface of the release sheet to obtain a solid electrolyte membrane, the surface of the solid electrolyte membrane may be covered with and protected by another release sheet.

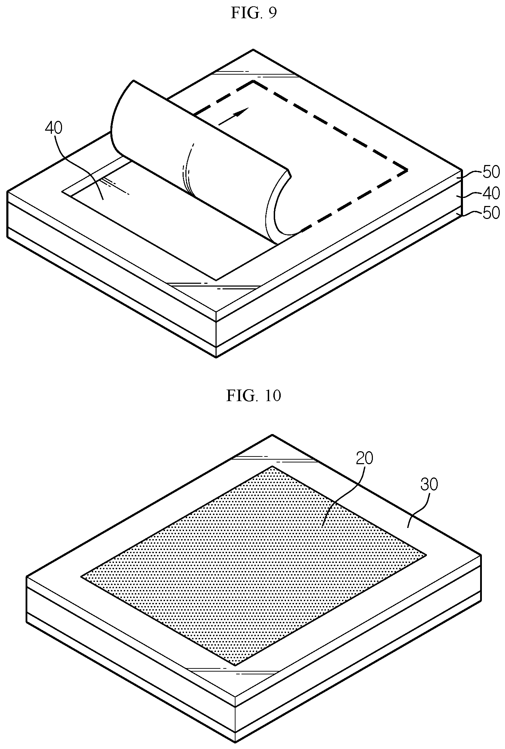

After preparing the member for an electrolyte membrane covered with the release sheet on at least one surface thereof, i.e. including the release sheet stacked with the solid electrolyte membrane, as described above, the member is supplied to a process for manufacturing a battery including a solid electrolyte membrane. Then, the portion to be peeled is removed from the release sheet (see, FIG. 9). Since the portion to be peeled is differentiated from the solid electrolyte membrane-protecting member portion by the cutting line and has lower peel force as compared to the solid electrolyte membrane-protecting member portion, it may be removed from the solid electrolyte membrane with ease. In this manner, the solid electrolyte membrane-protecting member may be formed according to the dimension of the edge portion of the solid electrolyte membrane.

After that, an electrode active material is embedded in the part from which the portion to be peeled is removed to form an electrode active material layer (FIG. 10). The part from which the portion to be peeled is removed functions as a kind of frame defining the area and height of the electrode active material layer. Since the electrode active material layer is formed by embedding an electrode active material in the part from which the portion to be peeled is removed, the electrode active material layer and the solid electrolyte membrane-protecting member may not be spaced apart from each other but may be in close contact with each other.

Meanwhile, according to another embodiment of the present disclosure, a solid-state battery may be obtained by preparing an electrode having a dimension conformed to the dimension of the part from which the portion to be peeled is removed, and disposing the electrode in the same part. Herein, the electrode may include a current collector and an electrode active material layer formed on the surface of the current collector. When the electrode is disposed in the part from which the portion to be peeled is removed as mentioned above, the electrode is embedded in such a manner that it may not be spaced apart from the solid electrolyte membrane-protecting member.

In this manner, a negative electrode stacked with a solid electrolyte membrane and a positive electrode stacked with a solid electrolyte membrane may be obtained. Then, such a negative electrode and positive electrode may be stacked successively with the solid electrolyte membrane interposed between both electrodes to obtain a solid-state battery.

Therefore, it is possible to dispose a solid electrolyte membrane-protecting member at the edge portion of a solid electrolyte membrane through a simple process by using a release sheet in which a solid electrolyte membrane-protecting member is disposed preliminarily, when manufacturing a solid-state battery. In addition, since the solid electrolyte membrane-protecting member functions as a kind of frame upon the formation of an electrode active material layer, a step of separately forming an electrode active material layer and carrying out lamination may be eliminated, resulting in improvement of the processability.

In still another aspect of the present disclosure, there are provided a battery module including the battery as a unit cell, a battery pack including the battery module, and a device including the battery pack as a power source. Herein, particular examples of the device may include, but are not limited to: power tools driven by an electric motor; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

Examples will be described more fully hereinafter so that the present disclosure can be understood with ease. However, the following examples are for illustrative purposes only and the scope of the present disclosure is not limited thereto.

### Example

First, a solid electrolyte membrane having a thickness of 50 µm and including a polymeric solid electrolyte material (mixture of PEO with LiFSI, molar ratio of [EO]/[Li⁺] = 20:1) was prepared. The solid electrolyte membrane was prepared with a size of 40 mm x 5 mm.

NCM811 (LiNi_{0.8}Co_{0.1}Mn_{0.1}O₂), vapor grown carbon fibers (VGCF) as a conductive material and a polymeric solid electrolyte (mixture of PEO with LiFSI((LiCF₃SO₂)₂N), molar ratio of [EO]/[Li⁺] = 20:1) were mixed at a weight ratio of 80:3:17, and the resultant mixture was introduced to acetonitrile, followed by agitation, to provide slurry for forming a positive electrode. The slurry was applied to an aluminum current collector (thickness 20 µm), and the resultant product was vacuum-dried at 120°C for 4 hours. Then, pressing was carried out by using a roll press to obtain a positive electrode having an electrode loading amount of 2 mAh/cm², an electrode layer thickness of 48 µm and a porosity of 10%. The positive electrode was prepared with a size of 36 mm x 46 mm.

Then, the positive electrode was disposed on the top surface of the solid electrolyte membrane, and a solid electrolyte membrane-protecting member was disposed in the portion corresponding to a difference in area between the positive electrode and the solid electrolyte membrane. The solid electrolyte membrane-protecting member was disposed by cutting a film made of polypropylene into a shape corresponding to the difference in area, and had the same thickness as the positive electrode. Meanwhile, lithium metal foil having a size of 40 mm x 50 mm was prepared as a counter electrode.

After that, the negative electrode, the solid electrolyte membrane and the positive electrode were stacked successively to obtain a battery. The resultant battery is schematically shown in FIG. 3a.

### Comparative Example

A battery was obtained in the same manner as Example, except that the solid electrolyte membrane-protecting member was eliminated.

### Evaluation of Cycle Characteristics

Each of the batteries according to Example and Comparative Example was charged/discharged to evaluate the charge/discharge capacity and capacity retention.
- Charge condition: constant current (CC)/constant voltage (CV), 4.0 V or 4.25 V, 0.005 C current cut-off, 60°C
- Discharge condition: constant current (CC), 3 V, 60°C

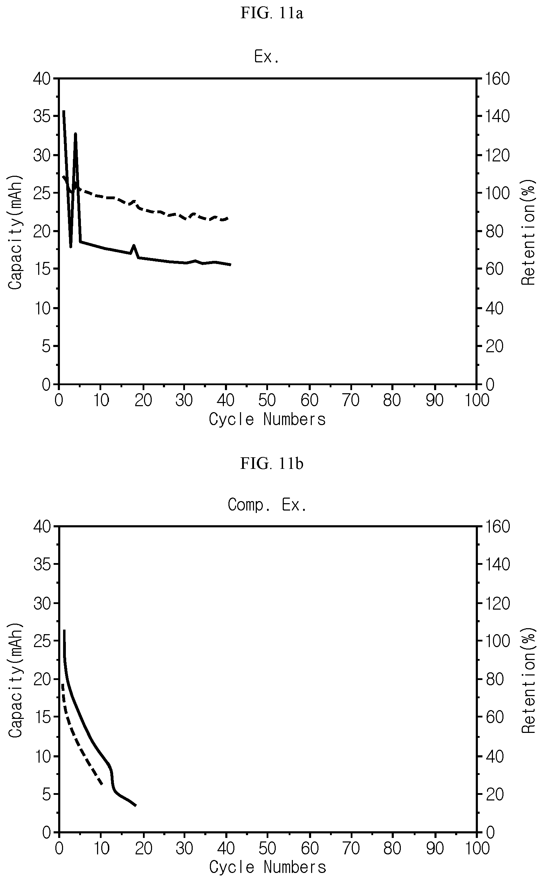

The capacity retention is derived by calculating a ratio of the discharge capacity at each cycle based on the discharge capacity at the first cycle. The results are shown in FIG. 11a and FIG. 11b.

It can be seen from the results that the battery according to Comparative Example causes a short-circuit before the 20^{th} cycle, while the battery according to Example is operated normally for 40 cycles or more and ensures a capacity retention of at least 80% at the 40^{th} cycle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

**[Description of Drawing Numerals]**

| | | | |
|---|---|---|---|
| 10: | Positive electrode | 11: | Positive electrode active material layer |
| 12: | Positive electrode curre ent collector | | |
| 20: | Solid electrolyte memb rane | | |
| 40: | Negative electrode | 41: | Negative electrode active material layer |
| 42: | Negative electrode curr rent collector | | |
| 30a : | Solid electrolyte membrane-protecting member formed at outer | | |
| | circumference of positive electrode | | |
| 30b: | Solid electrolyte membrane-protecting member formed at outer circumference of negative electrode | | |
| W: | Portion corresponding to difference in area between positive electrode and solid electrolyte membrane | | |
| 50: | Release sheet | | |
| S51: | Portion to be peeled having relative lower peel force | | |
| S52: | Solid electrolyte membrane-protecting member portion having relatively higher peel force | | |
| A: | Cutting line | | |

Item 1. A solid-state battery having a structure in which a negative electrode, a positive electrode and a solid electrolyte membrane interposed between the negative electrode and the positive electrode are stacked successively,
   wherein the solid electrolyte membrane has a larger area as compared to the negative electrode and the positive electrode based on the stacked surface,the negative electrode and the positive electrode are disposed inside of the solid electrolyte membrane based on the stacked surface,
   a solid electrolyte membrane-protecting member is formed on at least a part or the whole of the non-coated portion, which is not covered with the positive electrode and/or the negative electrode of the stacked surface of the solid electrolyte membrane due to the difference in area,
   the solid electrolyte membrane-protecting member and the positive electrode and/or the negative electrode disposed on the same surface as the solid electrolyte membrane-protecting member are not spaced apart from each other but are in close contact with each other at their lateral surfaces, and
   the solid electrolyte membrane comprises an ion conductive and electrically insulating material.
Item 2. The solid-state battery according to item 1, wherein the solid electrolyte membrane-protecting member and the positive electrode and/or the negative electrode formed on the same surface of the solid electrolyte membrane have the same height.
Item 3. The solid-state battery according to item 1, wherein the solid electrolyte membrane-protecting member has a frame-like shape comprising an edge portion with a predetermined width and an opening surrounded with the edge portion.
Item 4. The solid-state battery according to item 1, wherein the positive electrode has a smaller area as compared to the negative electrode based on the stacked surface, the positive electrode is disposed inside of the negative electrode, the solid electrolyte membrane-protecting member is formed on the non-coated portion of the surface of the solid electrolyte membrane on which at least the positive electrode is disposed, and the positive electrode and the solid electrolyte membrane-protecting member are not spaced apart from each other but are in close contact with each other.
Item 5. The solid-state battery according to item 4, wherein the solid electrolyte membrane-protecting member is further formed on the non-coated portion of the surface of the solid electrolyte membrane on which the negative electrode is disposed, and the negative electrode and the solid electrolyte membrane-protecting member are not spaced part from each other but are in close contact with each other.
Item 6. The solid-state battery according to item 1, wherein the solid electrolyte membrane-protecting member comprises a polymer material and has higher mechanical strength as compared to the solid electrolyte.
Item 7. The solid-state battery according to item 1, wherein the solid electrolyte membrane-protecting member comprises a polymer material, has a porous structure having a plurality of pores, and the pores have at least open pores.
Item 8. A method for manufacturing the solid-state battery as defined in item 1, comprising the steps of:
   preparing a member for an electrolyte membrane including a release sheet stacked with a solid electrolyte membrane;
   removing a predetermined central portion from the release sheet so that a part of the solid electrolyte membrane may be exposed; and
   embedding electrodes in the part from which the release sheet is removed,
   wherein the remaining part of the release sheet, which is not removed but retained, functions as a solid electrolyte membrane-protecting member.
Item 9. The method for manufacturing the solid-state battery according to item 8, wherein each of the part removed from the release sheet and the remaining part has difference peel force from the solid electrolyte membrane, and the peel force between the removed part and the solid electrolyte membrane is lower than the peel force between the remaining part and the solid electrolyte membrane.
Item 10. The method for manufacturing the solid-state battery according to item 9, wherein the remaining part of the release sheet is hydrophilically surface treated.

## Claims

1. A solid-state battery having a structure in which a negative electrode (40), a positive electrode (10) and a solid electrolyte membrane (20) interposed between the negative electrode (40) and the positive electrode (10) are stacked successively,
wherein the solid electrolyte membrane (20) has a larger area as compared to the negative electrode (40) and the positive electrode (10) based on the stacked surface,
the negative electrode (40) and the positive electrode (10) are disposed inside of the solid electrolyte membrane (20) based on the stacked surface,
a solid electrolyte membrane-protecting member (30a, 30b) is formed on at least a part or the whole of the non-coated portion, which is not covered with the positive electrode (10) and/or the negative electrode (40) of the stacked surface of the solid electrolyte membrane (20) due to the difference in area,
the solid electrolyte membrane-protecting member and the positive electrode and/or the negative electrode disposed on the same surface,,
wherein the solid electrolyte membrane-protecting member (30a) coincides with the solid electrolyte membrane (20) at their end portions, or the solid electrolyte membrane-protecting member (30a) has a larger size than the solid electrolyte membrane (20), and at least a part or the whole of the end portion of the solid electrolyte membrane-protecting member (30a) protrude out from the solid electrolyte membrane (20),
and the solid electrolyte membrane (20) comprises an ion conductive and electrically insulating material.

2. The solid-state battery according to claim 1, wherein the solid electrolyte membrane-protecting member (30a, 30b) and the positive electrode (10) and/or the negative electrode (40) formed on the same surface of the solid electrolyte membrane (20) have the same height.

3. The solid-state battery according to any one of claims 1 or 2, wherein the solid electrolyte membrane-protecting member (30a, 30b) has a frame-like shape comprising an edge portion with a predetermined width and an opening surrounded with the edge portion.

4. The solid-state battery according to any one of claims 1 to 3, wherein the positive electrode (10) has a smaller area as compared to the negative electrode (40) based on the stacked surface, the positive electrode (10) is disposed inside of the negative electrode (40)the solid electrolyte membrane-protecting member (30a, 30b) is formed on the non-coated portion of the surface of the solid electrolyte membrane (20) on which at least the positive electrode (10) is disposed, and the positive electrode (10) and the solid electrolyte membrane-protecting member (30a, 30b) are not spaced apart from each other but are in close contact with each other.

5. The solid-state battery according to claim 4, wherein the solid electrolyte membrane-protecting member (30a) is further formed on the non-coated portion of the surface of the solid electrolyte membrane (20) on which the negative electrode (40) is disposed, and the negative electrode (40) and the solid electrolyte membrane-protecting member (30a, 30b) are not spaced part from each other but are in close contact with each other.

6. The solid-state battery according to any one of claims 1 to 5, wherein the solid electrolyte membrane-protecting member (30a) comprises a polymer material and has higher mechanical strength as compared to the solid electrolyte (30).

7. The solid-state battery according to any one of claims 1 to 6, wherein the solid electrolyte membrane-protecting member (30a) comprises a polymer material, has a porous structure having a plurality of pores, and the pores have at least open pores.
